# EUROPÄISCHE PATENTSCHRIFT

(11) **EP 4 570 597 B1**
(45) Veröffentlichungstag und Bekanntmachung des Hinweises auf die Patenterteilung: **01.10.2025**
(21) Anmeldenummer: 23217157.9
(22) Anmeldetag: 15.12.2023
(51) Int. Cl.: B60R 19/18, B60R 19/34

(54) **BUMPER MIT VERSTÄRKUNGSBLECH UND VERBESSERTER CRASHEIGENSCHAFT**
BUMPER WITH REINFORCING PLATE AND IMPROVED CRASH PROPERTY
BUMPER DOTÉ D'UNE TÔLE DE RENFORCEMENT ET D'UNE PROPRIÉTÉ DE COLLISION AMÉLIORÉE

(43) Veröffentlichungstag der Anmeldung: 18.06.2025
(73) Patentinhaber: Benteler Automobiltechnik GmbH, 33102 Paderborn (DE)
(72) Erfinder: SCHILLER, Andreas, 59590 Ehringhausen (DE)
(74) Vertreter: Osterhoff, Utz

(56) Entgegenhaltungen:
- DE-A1- 102017 123 325
- DE-A1- 102021 128 850
- US-A1- 2010 127 519

## Beschreibung

Die vorliegende Erfindung betrifft einen Stoßfängerquerträger gemäß den Merkmalen im Oberbegriff von Anspruch 1.

Aus dem Stand der Technik sind Stoßfängerquerträger bekannt, die an Kraftfahrzeugkarosserien vorderseitig bzw. endseitig gekoppelt sind. Zumeist erfolgt dies unter Eingliederung von Crashboxen. Ein solcher Stoßfängerquerträger ist zumeist aus einem metallischen Werkstoff hergestellt, insbesondere aus einem Stahlwerkstoff oder Leichtmetallwerkstoff und kann auch als Bumper, Stoßfänger oder Querträger bezeichnet werden.

Ein Stoßfängerquerträger soll eine hinreichende Steifigkeit aufweisen, dass insbesondere beispielsweise bei einem Pol- oder Pfahltest eine hinreichende Abstützwirkung erreicht wird. Der Stoßfängerquerträger selbst ist also möglichst steif ausgebildet. Das Kraftfahrzeug prallt auf einen Gegenstand auf und die Crashboxen deformieren sich, hierbei wird Crashenergie in Umformarbeit gewandelt.

Es gibt jedoch auch Stoßfängerquerträger, die sich in einem gewissen Maße verformen sollen, ohne dabei eine Reststeifigkeit zu verlieren. Insbesondere soll der Stoßfängerquerträger beispielsweise bei einem Pol- oder Pfahltest nicht bei Überschreiten eines Kraftniveaus einknicken bzw. kollabieren.

Hierzu ist beispielsweise aus der WO 20 2005 3626 A1 ein Stoßfängerquerträger bekannt, der in einem mittleren Längenabschnitt ein Verstärkungsblech aufweist. Das Verstärkungsblech hilft, den Stoßfängerquerträger im mittleren Bereich zu versteifen. Bei Elektrokraftfahrzeugen ist im Vergleich zu Kraftfahrzeug mit Verbrennungsmotor der Stoßfängerquerträger steifer auszulegen, um insbesondere dahinterliegende Batterien bzw. Akkus zu schützen. Dies gilt insbesondere für einen Pol bzw. Pfahltest, so dass ein Intrudieren des Stoßfängerquerträgers zwischen die Vorderräder bzw. dem Vorderwagenbereich des Kraftfahrzeuges effektiv zu vermeiden ist.

Aus der EP 4 177 114 A1 ist ein gattungsbildender Querträger bekannt.

Weiterhin ist aus der DE 10 2017 123 325 A1 eine Stoßfängeranordnung nach dem Oberbegriff von Anspruch 1 bekannt

Aufgabe der vorliegenden Erfindung ist es, den Stoßfängerträger hinsichtlich seiner Crasheigenschaft weiter zu optimieren, um insbesondere eine Intrusion bei einem Pol- bzw. Pfahltest zu vermeiden.

Die Erfindung wird erfindungsgemäß mit den Merkmalen im Anspruch 1 gelöst.

Vorteilhafte Ausgestaltungsvarianten sind in den abhängigen Ansprüchen beschrieben.

Der erfindungsgemäße Stoßfängerquerträger ist für ein Kraftfahrzeug, insbesondere ein Elektrokraftfahrzeug geeignet. Der Stoßfängerquerträger erstreckt sich in Kraftfahrzeugquerrichtung und ist insbesondere über Crashboxen im Vorderwagenbereich mit einem Kraftfahrzeug gekoppelt. Es kann somit auch eine Stoßfängerquerträgeranordnung als Stoßfängerquerträgeranordnung bezeichnet sein. Der Stoßfängerquerträger selbst weist im Querschnitt ein Hohlprofil auf, welches insbesondere einen rechteckigen Querschnitt besitzt. In einem mittleren Längenabschnitt ist ein Verstärkungsblech eingesetzt.

Erfindungsgemäß ist das Verstärkungsblech an einer Seite in Kraftfahrzeuglängsrichtung gesehen, an einer Vorderwand innenseitig an dem Hohlprofil gekoppelt, insbesondere gefügt. Zu der verbleibenden Rückseite weist das Verstärkungsblech einen Abstand, ebenfalls in Kraftfahrzeuglängsrichtung gemessen, auf. Die Vorderseite bzw. Vorderwand weist zumindest im Längenabschnitt des Verstärkungsbleches eine in Kraftfahrzeuglängsrichtung nach außen orientierte Ausformung auf. Nach außen bezieht sich auf den Innenraum des Stoßfängerquerträgers. Diese Ausformung ist im Bereich der gekoppelten Stelle bzw. des gekoppelten Abschnitts zum Längenabschnittes mit dem Verstärkungsblech ausgebildet. Die Ausformung erstreckt sich damit in Kraftfahrzeuglängsrichtung über mindestens 80 % des Abstandes, bevorzugt um mehr als 85 %, insbesondere mehr als 90 %, besonders bevorzugt mehr als 95 %. Die Ausformung ist jedoch kleiner als 120 %, besonders bevorzugt kleiner als 110 %, insbesondere kleiner als 105 %. Der Abstand weist dazu eine Länge in Kraftfahrzeuglängsrichtung auf, über die sich der Abstand erstreckt, mithin die Rückseite des Verstärkungsblechs zu der Innenseite der Rückwand des Hohlprofils. Die prozentuale Angabe bezieht sich dann auf die Länge dieses Abstandes. Ganz besonders bevorzugt entspricht die Länge der Ausformung in Kraftfahrzeuglängsrichtung im Wesentlichen dem Abstand. Der Abstand beträgt vorzugsweise 1 bis 6 mm, besonders bevorzugt 5 mm. Der Abstand sollte jedoch insbesondere mindestens 2 bis 3 mm betragen.

Es hat sich überraschenderweise hierdurch folgender erfinderischer Effekt herausgestellt. Dadurch, dass im Wesentlichen die Ausformung im Bereich der gekoppelten Stelle auf eine Innenseite des Stoßfängerquerträgers bezogen nach außen geformt ist, ist damit das Verstärkungsblech innerhalb des Stoßfängerquerträgers relativ versetzt angeordnet. In einem Crashszenario verschiebt sich somit zunächst der Bereich der Ausformung durch Eigenverformung in den Bereich des Stoßfängerquerträgers relativ, dergestalt, dass der Abstand zwischen Verstärkungsblech und bevorzugt Innenseite der Rückwand sich zu Null verringert. Das Verstärkungsblech kommt also an der Innenseite der Rückwand des Stoßfängerquerträgers zur Anlage. Die Vorderwand ist bevorzugt nur in einem kleinen Bereich der Ausformung deformiert, ansonsten jedoch ist die Vorderwand noch nicht deformiert und damit der Stoßfängerquerträger ebenfalls nicht deformiert. Bei weiterem Eindringen des aufzutreffenden Gegenstandes liegt somit das Verstärkungsblech innerhalb des Stoßfängerträgers an und es muss dann bei weiterer Verformung das Verstärkungsblech zusammen mit dem Stoßfängerquerträger weiter verformt werden. Beide Bauteile Verstärkungsblech und Stoßfängerquerträger sind an sich zu diesem Zeitpunkt des Crashablaufes noch unverformt. Hier setzt die Erfindung überraschenderweise an, dass dadurch ein höherer lokaler Biegewiderstand zu verzeichnen ist, wodurch insbesondere die Crashperformance des erfindungsgemäßen Stoßfängerquerträgers effektiv gesteigert ist, ohne dass beispielsweise erhöhter Materialeinsatz notwendig ist. Der Abstand ist jedoch herstellungsbedingt aus Toleranzgründen vorhanden.

Ein weiterer Effekt ist, dass insbesondere, wenn die geometrische Ausformung durch zwei über den Längenverlauf ausgeformte Sicken hergestellt ist, auch dies zusätzlich den Querträger aussteift bzw. verstärkt.

Das Hohlprofil des Querträgers ist insbesondere durch ein Hutprofil ausgebildet mit einem Schließblech. Das Schließblech ist besonders bevorzugt in Kraftfahrzeuglängsrichtung nach vorn zeigend orientiert angeordnet. Die zur Verfügung stehende Aufprallfläche aufgrund nach außen abstehender Flansche des Hutprofils in Verbindung mit dem Schließblech ist dadurch vergrößert.

Das Verstärkungsblech selbst ist im Querschnitt profiliert ausgebildet, insbesondere U-förmig oder V-förmig bzw. auch W-förmig oder Omega-förmig.

Besonders bevorzugt ist der Stoßfängerquerträger selbst aus einem Stahlwerkstoff ausgebildet, insbesondere ist das Schließblech ebenfalls aus einem Stahlwerkstoff ausgebildet, insbesondere können beispielsweise warmumformte pressgehärtete Stäbe zum Einsatz kommen, besonders bevorzugt können zumindest lokale Bereiche mit einer Zugfestigkeit größer 1300 MPa versehen sein.

Die Wandstärke kann 1 bis 3 mm für den Querträger, insbesondere das Hutprofil betragen, bevorzugt 2 mm. Das Schließblech ist besonders bevorzugt in 1 bis 1,5 mm, besonders bevorzugt aus 1 bis 2 mm starker Wandstärke hergestellt. Beispielsweise ist es vorstellbar, dass das Hutprofil eine höhere Zugfestigkeit Rm aufweist als das Schließblech. Beispielsweise kann das Hutprofil aus einem hochfesten oder ultrahochfesten Stahl bzw. einem warmumgeformten Stahl hergestellt werden, wohingegen das Schließblech aus einem Normalstahl oder auch einem hochfesten Stahl bzw. ultra hochfestem Stahl hergestellt werden kann.

Das Verstärkungsblech ist insbesondere innenseitig an dem Schließblech thermisch gefügt, insbesondere verschweißt. Das Schließblech selbst ist dann wiederum bevorzugt an den Flanschen des Hutprofils thermisch gefügt, insbesondere verschweißt.

Das Verstärkungsblech sitzt dabei zentral mittig, bezogen auf die Kraftfahrzeugquerrichtung. Es erstreckt sich über 10 bis 50 %, bevorzugt 20 bis 40 % der Länge des Stoßfängerquerträgers.

Das Verstärkungsblech selbst kann in seinen Enden (die Enden liegen jeweils in Kraftfahrzeugquerrichtung), auf die Kraftfahrzeuglängsrichtung bezogen schmaler ausgebildet sein bzw. verjüngend ausgebildet sein. Dies kann beispielsweise durch ein schneidtechnisches Verfahren des Verstärkungsbleches erfolgen.

Anstelle von zwei ausgewölbten Sicken kann auch das Schließblech eine Auswölbung aufweisen. Dies Auswölbung bzw. geometrische Ausformung entspricht, bezogen auf die Vorderwand selbst im Wesentlichen dem Abstand, welchen das Verstärkungsblech zur Innenseite der Rückwand des Stoßfängerquerträgers aufweist.

Weitere Vorteile, Merkmale und Eigenschaften der vorliegenden Erfindung sind Gegenstand der nachfolgenden Beschreibung. Bevorzugte Ausgestaltungsvarianten werden in schematischen Figuren dargestellt. Diese dienen dem einfachen Verständnis der Erfindung.

Es zeigen:
- Figur 1: eine erfindungsgemäße Stoßfängerträgeranordnung in Draufsicht,
- Figur 2a und b: eine Querschnittsansicht gemäß der Schnittlinie A-A von Figur 1,
- Figur 3a, b und c: eine Querschnittsansicht gemäß der Linie A-A vor und nach unmittelbarem Eintreten eines Crashszenarios,
- Figur 4a und b: die Stoßfängeranordnung in Draufsicht bei einem Crashszenario,
- Figur 5a und b: eine alternative Ausgestaltungsvariante zur Figur 2a und b und
- Figur 6a und b: eine alternative Ausgestaltungsvariante zur Figur 5a und b.

In den Figuren werden für gleiche oder ähnliche Bauteile dieselben Bezugszeichen verwendet, auch wenn eine wiederholte Beschreibung aus Vereinfachungsgründen entfällt.

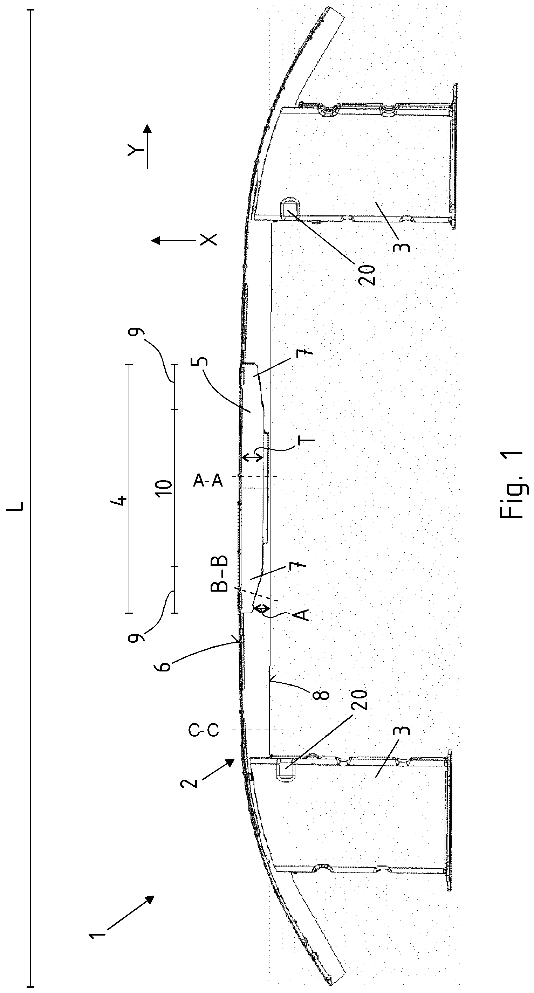

Figur 1 zeigt eine Stoßfängerquerträgeranordnung 1 in Draufsicht. Der Stoßfängerquerträger 2 ist mit Crashboxen 3 gekoppelt. Die Stoßfängerquerträgeranordnung 1 wird dann an einer nicht näher dargestellten Kraftfahrzeugkarosserie gekoppelt. Der Stoßfängerquerträger 2 weist über seine Länge einen im Wesentlichen gekrümmten Verlauf auf. Ein mittlerer Längenabschnitt 4 kann auch im Wesentlichen gerade ausgebildet sein.

In einem mittleren Längenabschnitt 4 ist in dem Stoßfängerquerträger 2 ein hier dargestelltes separates Verstärkungsblech 5 angeordnet und mit einem Schließblech 13 gekoppelt. Das Schließblech 13 mit dem Verstärkungsblech 5 ist wiederum mit der Vorderwand bzw. Flanschen des Stoßfängerquerträgers 2 gekoppelt. Es handelt sich bei dem Verstärkungsblech 5, dem Schließblech 13 und dem Stoßfängerquerträger 2 bzw. dem Hohlprofil des Stoßfängerquerträgers 2 somit um drei separate Bauteile. An den jeweiligen Enden 7 des Verstärkungsbleches 5 ist das Verstärkungsblech 5 in seiner Tiefe T verjüngt ausgebildet. Die Tiefe T ist im Wesentlichen in Kraftfahrzeuglängsrichtung X orientiert. Der mittlere Längsabschnitt 4 weist eine Längserstreckung von 20 % bis 50 %, insbesondere 20 % bis 40 % der Länge L des Stoßfängerquerträgers 2 auf. Die Länge L bezieht sich auf die Kraftfahrzeugquerrichtung Y.

Das Verstärkungsblech 5 weist verjüngte Enden 7 auf und durch die verjüngten Enden 7 vergrößert sich der Abstand A zwischen einer Rückwand 8 des Stoßfängerquerträgers 2 und dem jeweils verjüngtem Ende 7. Über den gesamten Längsverlauf weist das Verstärkungsblech 5 keinen unmittelbaren Kontakt mit der Rückwand 8 des Stoßfängerquerträgers 2 auf.

Ferner ist ein jeweiliger Längenabschnitt als verschweißter Längenabschnitt 9 ausgebildet, in welchem das Verstärkungsblech mit dem Schließblech 6 verschweißt ist. Die verschweißten Längenabschnitte 9 betragen besonders bevorzugt 5 % bis 20 %, insbesondere 5 % bis 10 % des mittleren Längenabschnitts 4. Ein dazwischenliegender nicht verschweißter Längenabschnitt 10 kann sich somit im Crashfalle deformieren bzw. könnte sich die Vorderwand 6 und das Verstärkungsblech relativ zueinander bewegen. Auch kann der vollständige Längenabschnitt 4 zwischen Vorderwand und Verstärkungsblech verschweißt sein.

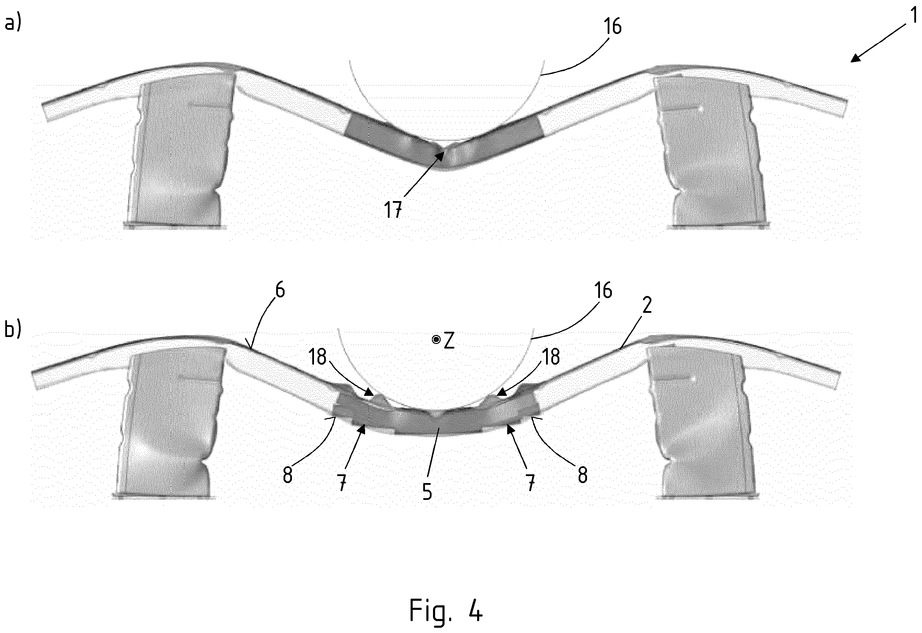

Weiterhin können besonders bevorzugt Entlastungselemente 20 an den zueinanderweisenden Seitenwänden der Crashbox 3 angeordnet sein. Die Entlastungselemente 20 können beispielsweise als Schlitz, Langloch, Rundloch oder auch Verprägung ausgebildet sein. Hier findet eine gezielte Schwächung der Crashboxen 3 statt. Bei dem in Figur 4 dargestellten Crashfall können die Crashboxen 3 somit sich aufeinander zubewegen und begünstigen damit ebenfalls eine Durchbiegung des Stoßfängerträgers 2, insbesondere gemäß Figur 4b.

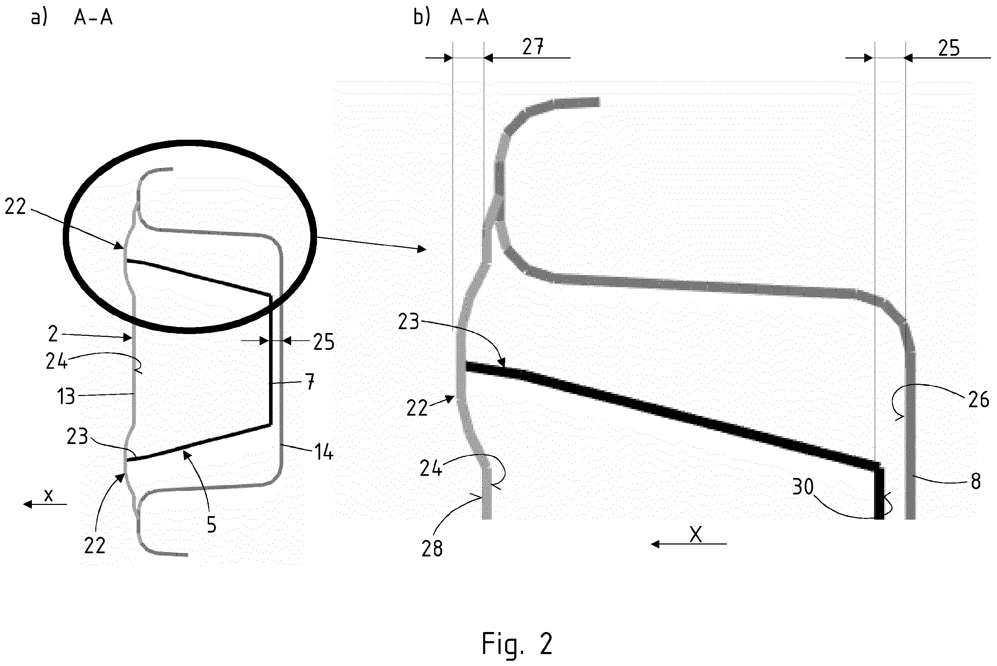

Figuren 2a und 2b zeigen eine Schnittlinie im Querschnitt A-A bei Y = 0 aus Figur 1. Zu erkennen ist, dass der Stoßfängerquerträger 2 im Querschnitt als Hutprofil 14 ausgebildet ist, wobei dieser ein Hutprofil 14 aufweist sowie ein vorderes in Kraftfahrzeug X-Richtung vorne angeordnete Schließblech. In dem Schließblech 13 sind zwei Auswölbungen 22 in Form von Sicken ausgebildet. Diese Auswölbungen 18 stehen in Kraftfahrzeuglängsrichtung X orientiert nach vorne gegenüber dem Schließblech 13 über. Das Verstärkungsblech 5 ist innerhalb der Auswölbung 22 an das Schließblech 13 gekoppelt. Hierbei sind die Enden von Stegen mit der Innenseite des Schließblechs 13, mithin der Vorderwand 6 gekoppelt. In der Detailvergrößerung gemäß Figur 2b ergibt sich somit ein Abstand von der Innenseite der Rückwand zu auf einer auf die in Kraftfahrzeuglängsrichtung X gerichteten Rückseite des Verstärkungsblechs 5. Dieser Abstand 25 entspricht dabei im Wesentlichen der Länge bzw. dem Maß 27, mit dem die Auswölbung gegenüber der Vorderseite des Schließblechs 13 übersteht.

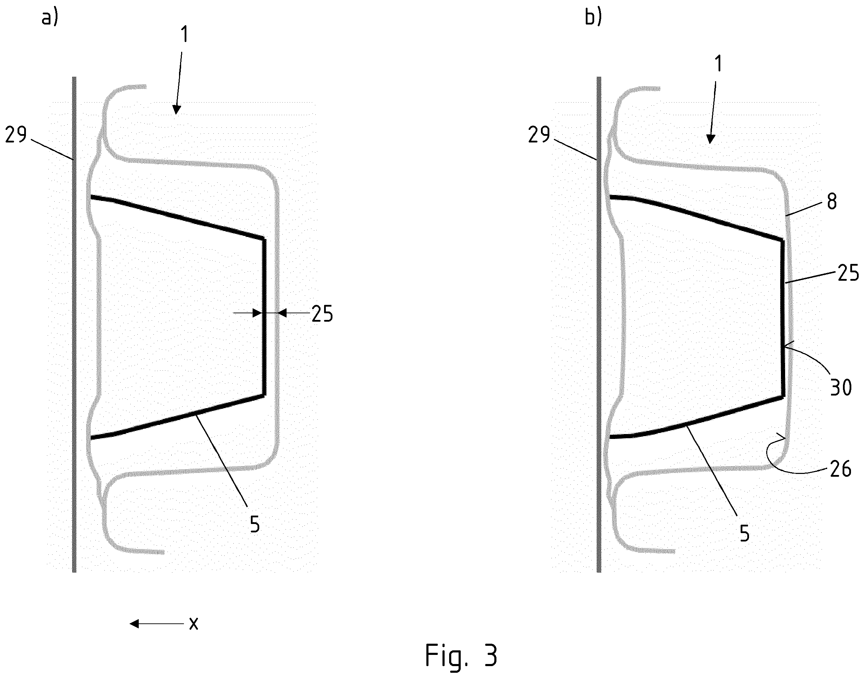

Hierdurch ergibt sich der in Figur 3a und 3b dargestellte erfindungsgemäße Effekt. Auf einen aufprallenden Gegenstand in Kraftfahrzeug X-Richtung trifft somit die Stoßfängeranordnung auf. Figur 3a zeigt eine Situation zeitlich kurz vor dem Aufprall. In Figur 3b ist dann ein Zustand dargestellt, der sich kurze Zeit nach dem initialen Aufprall des Gegenstandes auf die Stoßfängeranordnung einstellt. Der Abstand 25 ist zu null reduziert. Die Rückseite des Verstärkungsbleches 5 liegt an der Innenseite der Rückwand an. In diesem Zustand, der in Figur 3b dargestellt ist, wenige Millisekunden nach dem ersten Abprall, sind jedoch der Stoßfängerquerträger selbst und das Verstärkungsblech noch nicht weiter verformt.

Der erfindungsgemäße Effekt ist nunmehr in Gegenüberstellung in Figur 4a und b dargestellt. Die Stoßfängeranordnung 2 wird aufgrund eines Pols bzw. Pfahls 16 eingedrückt bzw. erfährt eine Biegung bzw. kurvenförmige Deformation. Gemäß Figur 4a entsteht eine Knickstelle 17 oder in der Rückwand mittig sogar ein Riss, was zum sofortigen vollständigen Kollabieren ohne weiteren Energieabbau des Stoßfängers führt. Hierbei ist entweder kein Verstärkungsblech eingesetzt oder ein Verstärkungsblech 5 ohne sich verjüngende Enden und ohne Kopplung in eine Auswölbung des Schließbleches.

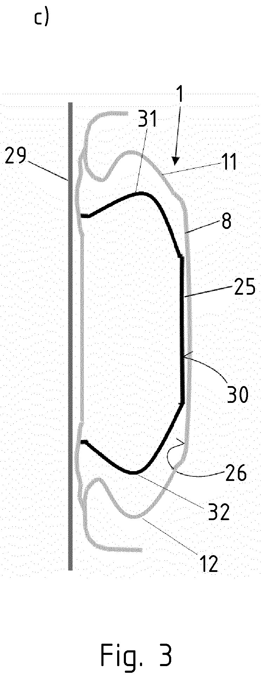

Gemäß Figur 4b schmiegt sich die Rückwand des Stoßfängerquerträgers 8 bevorzugt weiter an die verjüngten Enden 7 des erfindungsgemäßen Verstärkungsbleches 5 an, während - wie in Figur 3c gut erkennbar - sowohl Obergurt 11 und Untergurt 12 des Querträgers als auch die horizontalen Wände 31, 32 des Verstärkungsblechs 5 zeitgleich und gleichartig verformt werden. Hierdurch wird ein Einknicken vermieden und ein hohes Maß an Aufprallenergie abgebaut. Die Vorderwand 6 und auch die Rückwand 8 können sich in Kraftfahrzeugquerrichtung jeweils relativ zu dem Verstärkungsblech 5 verschieben. Auf der Rückwand 8 erfolgt dies nach dem Prinzip eines Zugbandes. An der Vorderwand 6 ergeben sich leichte Aufwölbungen 18, es erfolgt jedoch keine Knickstelle bzw. ein Einknicken. Hierdurch wird es erfindungsgemäß erreicht, dass eine gezielte Verformung zum Energieabbau bereitgestellt ist, ohne dass der Stoßfängerquerträger 2 durchschlägt.

Die eigentliche Verformung, so wie sie nunmehr in Figur 4a und Figur 4b dargestellt ist, findet dann zeitlich erst nach dem Zustand von Figur 3b statt. Während jedoch dem Zustand von Figur 3b ist das Widerstandsmoment gegen Biegung besonders hoch. Der in Figur 3a bzw. Figur 2a und b dargestellte Abstand 25 der Rückseite des Verstärkungsbleches der Innenseite der Rückwand wird jedoch aus Toleranzgründen in der Fertigung des Stoßfängerträgers mit Schließblech 13 zunächst benötigt. Durch gezielte Ausnutzung bzw. Vereinheitlichung von Abstand der Rückwand des Verstärkungsbleches zu der Innenseite der Rückwand des Hohlprofils in Verbindung mit der überstehenden Ausbauchung kann dies jedoch vorteilig auf die Crasheigenschaft sich auswirken.

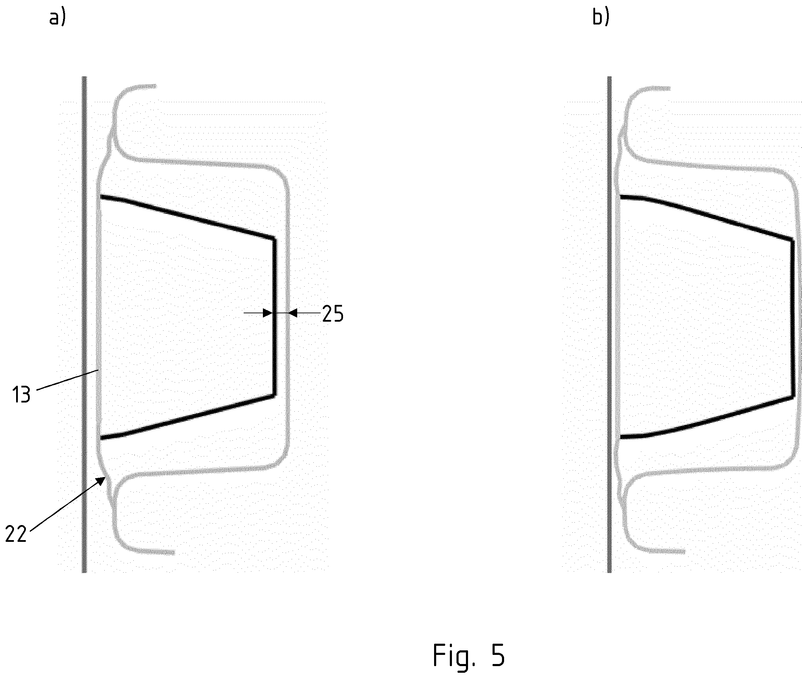

Figur 5a und Figur 5b zeigen ein Ausführungsbeispiel analog zur Figur 3a und b. Hier ist jedoch die nach vorne ausgebildete Ausformung bzw. Auswölbung je als zwei Sicken ausgebildet, sondern als eine mit einem Offset herausgeformte Fläche des Schließblechs 13. Der erfindungsgemäße Effekt tritt hier gleichermaßen ein. Figur 5b zeigt ein Zustand unmittelbar nach dem Aufprall. Auch hier ist der Abstand 25 zu Null ausgebildet und dann beginnt die Verformung von Verstärkungsblech und Stoßfängerquerträger 2 gleichermaßen.

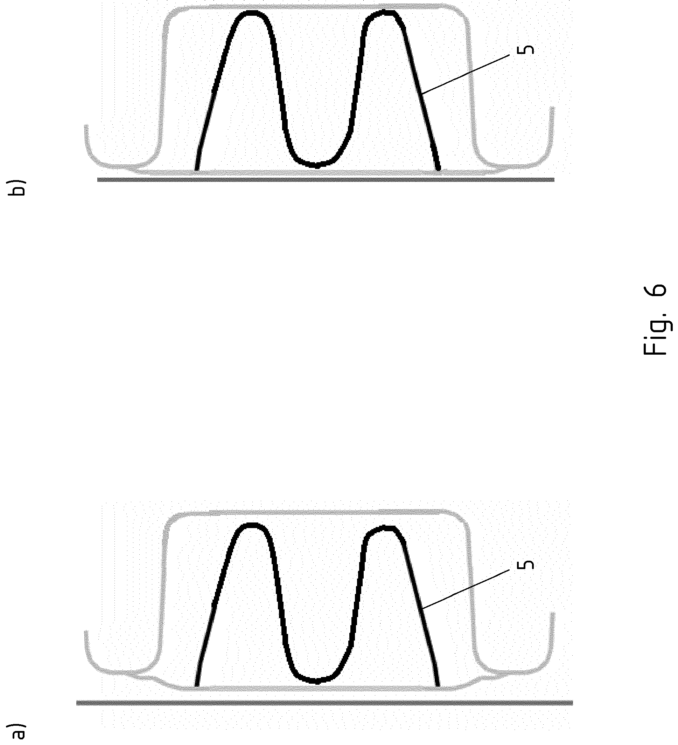

Figur 6a und Figur 6b zeigt ein Ausführungsbeispiel analog zur Figur 5a und b. Hierbei ist jedoch das Verstärkungsblech selbst W-förmig im Querschnitt ausgebildet. Bei Figur 2a und b, 3a und b und 5a und b ist das Verstärkungsblech 13 im Querschnitt selbst U- bzw. V-förmig ausgebildet.

### Bezugszeichen:

- 1 -: Stoßfängerquerträgeranordnung
- 2 -: Stoßfängerquerträger
- 3 -: Crashbox
- 4 -: mittlerer Längenabschnitt
- 5 -: Verstärkungsblech
- 6 -: Vorderwand zu 2
- 7 -: Ende zu 5
- 8 -: Rückwand zu 2
- 9 -: verschweißter Längenabschnitt
- 10 -: nicht verschweißter Längenabschnitt
- 11 -: Obergurt
- 12 -: Untergurt
- 13 -: Schließblech
- 14 -: Hutprofil
- 15 -: weiterer Längenabschnitt
- 16 -: Pol/Pfahl
- 17 -: Knickstelle
- 18 -: Aufwölbung
- 19 -: Verschweißung
- 20 -: Entlastungselement
- 21 -: Rückwand zu 5
- 22 -: Auswölbung/Ausformung
- 23 -: Ende
- 24 -: Innenseite zu 6
- 25 -: Abstand
- 26 -: Innenseite zu 8
- 27 -: Länge
- 28 -: Vorderseite zu 6 bzw. 13
- 29 -: Gegenstand/Barriere
- 30 -: Rückseite zu 5
- 31 -: Wand
- 32 -: Wand

- A -: Abstand
- T -: Tiefe
- T7 -: Tiefe zu 7
- T15 -: Tiefe zu 15
- L -: Länge zu 2
- X -: Kraftfahrzeuglängsrichtung
- Y -: Kraftfahrzeugquerrichtung

## Patentansprüche

1. Stoßfängerquerträger (2) für ein Kraftfahrzeug, welcher sich in Kraftfahrzeugquerrichtung erstreckt und im Querschnitt ein Hohlprofil aufweist, insbesondere einen zumindest längenabschnittsweise geschlossenen Querschnitt, wobei in einem mittleren Längenabschnitt ein Verstärkungsblech (5) eingesetzt ist, wobei das Verstärkungsblech (5) an einer Seite in Kraftfahrzeuglängsrichtung (X) an einer Vorderwand (6) des Hohlprofils gekoppelt ist und einen Abstand (25) in Kraftfahrzeuglängsrichtung (X) orientiert zu einer Rückwand (8) des Hohlprofils aufweist und die Vorderwand (6) im Bereich der gekoppelten Stelle eine in Kraftfahrzeuglängsrichtung (X) nach außen orientierte Ausformung (22) aufweist, welche mindestens 80 % und weniger als 120 % des Abstandes (25) entspricht, **dadurch gekennzeichnet, dass** das Verstärkungsblech (5) zentral mittig, bezogen auf die Kraftfahrzeugquerrichtung (Y), sitzt und sich über 10 % bis 50 % der Länge des Kraftfahrzeugquerträgers (2) erstreckt.

2. Stoßfängerquerträger (2) nach Anspruch 1, **dadurch gekennzeichnet, dass** das Hohlprofil als Hutprofil (14) ausgebildet ist, mit einem Schließblech (13).

3. Stoßfängerquerträger (2) nach Anspruch 1 oder 2, **dadurch gekennzeichnet, dass** das Schließblech (13) als Vorderwand (6) des Hohlprofils ausgebildet ist und in Kraftfahrzeuglängsrichtung (X) nach vorn zeigend angeordnet ist.

4. Stoßfängerquerträger (2) nach dem vorhergehenden Anspruch, **dadurch gekennzeichnet, dass** das Verstärkungsblech (5) im Querschnitt profiliert, insbesondere, U-förmig oder V-förmig ausgebildet ist oder W-förmig ausgebildet ist.

5. Stoßfängerquerträger (2) nach einem der vorangehenden Ansprüche, **dadurch gekennzeichnet, dass** das Verstärkungsblech (5) sich in Kraftfahrzeugquerrichtung (Y) über eine Länge zwischen 20 und 40 % der Länge des Stoßfängerquerträgers (2) erstreckt.

6. Stoßfängerquerträger (2) nach einem der vorangehenden Ansprüche, **dadurch gekennzeichnet, dass** das Verstärkungsblech (5) längenabschnittsweise, mit der Vorderwand gekoppelt ist, insbesondere verschweißt ist.

7. Stoßfängerquerträger (2) nach einem der vorangehenden Ansprüche, **dadurch gekennzeichnet, dass** die gekoppelte Wand zwei Ausformungen (22) nach außen, in Kraftfahrzeuglängsrichtung (X) orientiert, als ausgewölbte Sicken aufweist, die sich in Kraftfahrzeugquerrichtung zumindest im Bereich des Verstärkungsbleches (5), bevorzugt über mindestens 70 %, bevorzugt mehr als 80 %, besonders bevorzugt in Kraftfahrzeugquerrichtung der Länge (L) des Hohlprofiles erstrecken, insbesondere zumindest abschnittsweise die Crashboxen überdeckend erstrecken.

## Claims

1. Bumper cross member (2) for a motor vehicle, which extends in the transverse direction of the motor vehicle and has a hollow profile in cross section, in particular a cross section which is closed at least in lengthwise sections, wherein a reinforcing plate (5) is inserted in a central longitudinal section, wherein the reinforcing plate (5) is coupled on one side in the longitudinal direction (X) of the motor vehicle to a front wall (6) of the hollow profile and has a distance (25) in the longitudinal direction (X) of the motor vehicle to a rear wall (8) of the hollow profile and the front wall (6) in the region of the coupled point has a formation (22), oriented outwards in the longitudinal direction (X) of the motor vehicle, which corresponds to at least 80 % and less than 120 % of the distance (25), **characterised in that** the reinforcing plate (5) is located centrally in the middle, relative to the transverse direction (Y) of the motor vehicle, and extends over 10 % to 50 % of the length of the motor vehicle cross member (2).

2. The bumper cross member (2) according to claim 1, **characterised in that** the hollow profile is configured as a hat profile (14) with a locking plate (13).

3. The bumper cross member (2) according to claim 1 or 2, **characterised in that** the locking plate (13) is designed as a front wall (6) of the hollow profile and is arranged pointing forward in the longitudinal direction (X) of the motor vehicle.

4. The bumper cross member (2) according to the preceding claim, **characterised in that** the reinforcing plate (5) is profiled in cross section, in particular U-shaped or V-shaped or W-shaped.

5. The bumper cross member (2) according to any one of the preceding claims, **characterised in that** the reinforcing plate (5) extends in the motor vehicle transverse direction (Y) over a length between 20 and 40 % of the length of the bumper cross member (2).

6. The bumper cross member (2) according to any one of the preceding claims, **characterised in that** the reinforcing plate (5) is coupled, in particular welded, to the front wall in lengthwise sections.

7. The bumper cross member (2) according to any one of the preceding claims, **characterised in that** the coupled wall has two outwards formations (22), oriented in the longitudinal direction (X) of the motor vehicle, as curved beads, which extend in the transverse direction of the motor vehicle at least in the region of the reinforcing plate (5), preferably extend over at least 70 %, preferably more than 80 %, particularly preferably in the transverse direction of the motor vehicle of the length (L) of the hollow profile, in particular extend at least partially covering the crash boxes.

## Revendications

1. Traverse de pare-chocs (2) pour un véhicule à moteur qui s'étend dans la direction transversale du véhicule à moteur et présente en section transversale un profilé creux, en particulier une section transversale fermée au moins par section longitudinale, dans laquelle une tôle de renfort (5) est insérée dans une section longitudinale centrale, dans laquelle la tôle de renfort (5) est couplée d'un côté dans le sens longitudinal du véhicule (X) à une paroi avant (6) du profilé creux et présente une distance (25) dans le sens longitudinal du véhicule à moteur (X) orientée vers une paroi arrière (8) du profilé creux et la paroi avant (6) dans la zone de l'emplacement couplé dans le sens longitudinal du véhicule à moteur (X) présente une forme (22) orientée vers l'extérieur, qui correspond à au moins 80 % et moins de 120 % de l'écart (25), **caractérisée en ce que** la tôle de renfort (5) se trouve au centre, par rapport à la direction transversale du véhicule à moteur (Y), et s'étend sur 10 % à 50 % de la longueur de la traverse de véhicule à moteur (2).

2. Traverse de pare-chocs (2) selon la revendication 1, **caractérisée en ce que** le profilé creux est réalisé en tant que profilé chapeau (14), avec une tôle de fermeture (13).

3. Traverse de pare-chocs (2) selon la revendication 1 ou la revendication 2, **caractérisée en ce que** la tôle de fermeture (13) est réalisée en tant que paroi avant (6) du profilé creux et est agencée dans le sens longitudinal du véhicule (X) pointant vers l'avant.

4. Traverse de pare-chocs (2) selon la revendication précédente, **caractérisée en ce que** la tôle de renfort (5) est profilée en section transversale, en particulier, est réalisée en forme de U ou en forme de V ou est réalisée en forme de W.

5. Traverse de pare-chocs (2) selon l'une quelconque des revendications précédentes, **caractérisée en ce que** la tôle de renfort (5) s'étend dans la direction transversale du véhicule à moteur (Y) sur une longueur comprise entre 20 et 40 % de la longueur de la traverse de pare-chocs (2).

6. Traverse de pare-chocs (2) selon l'une quelconque des revendications précédentes, **caractérisée en ce que** la tôle de renfort (5) est couplée, en particulier soudée, à la paroi avant par sections longitudinales.

7. Traverse de pare-chocs (2) selon l'une quelconque des revendications précédentes, **caractérisée en ce que** la paroi couplée présente deux formes (22) orientées vers l'extérieur dans le sens longitudinal du véhicule (X), en tant que nervures bombées, qui se prolongent dans le sens transversal du véhicule à moteur au moins dans la zone de la tôle de renfort (5), de préférence s'étendent sur au moins 70 %, de préférence plus de 80 %, particulièrement préférentiellement dans la direction transversale du véhicule à moteur de la longueur (L) du profilé creux, en particulier s'étendent au moins par sections de manière à recouvrir les caissons anticollision.
